# EUROPEAN PATENT APPLICATION

(11) **EP 1 047 001 A1**
(43) Date of publication of application: **25.10.2000**
(21) Application number: 00201243.3
(22) Date of filing: 05.04.2000
(51) Int. Cl.: G06F 17/21

(54) **Method for processing a structured document**

(30) Priority: 22.04.1999 BE 9900289
(71) Applicant: Fotek, Naamloze Vennootschap, 9100 Sint-Niklaas (BE)
(72) Inventor: Van Den Bergh, Steven Fransiscus Maria, 9100 Sint-Niklaas (BE); Van Den Bergh, John-John Pieter Jan, 2018 Antwerpen (BE)
(74) Representative: Debrabandere, René

(57) **Abstract**

The invention concerns a method for processing a structured document. This document (1) is stored in a database (2) without any medium-dependant and/or publication-dependant information. The medium-independent information is kept separate from the medium-dependant and/or publication dependant information. A list (8) with medium-dependant and/or publication-dependant information which is linked to the structured document (1) is stored separately in a second database (5), and after the structured document (1) in the first-mentioned database (2) has been processed, the position of the medium-dependant and/or publication-dependant information in the second database (5) is adjusted on the basis of the list (8) with adjustments.

## Description

The present invention concerns a method for processing a structured document, whereby the structured document is stored in a database without any medium-dependant and/or publication-dependant information, such as for example page separators.

It is known, in order to reproduce a medium, to add medium-dependant and/or publication-dependant information, namely process instructions, to the stored information, i.e. the structured document which has been stored without any medium-dependant and/or publication-dependant information. Thus is obtained a new structured document which is contaminated with medium-dependant and/or publication-dependant information, for example page separators, and which is stored in the database.

Every time that new adjustments have to be made to the structured document, for example because an adaptation of the structured document has to be published, the entire process has to be repeated, which implies that one has to start again from the document which does not contain any medium-dependant and/or publication-dependant information, to which medium-dependant and/or publication-dependant information subsequently has to be added again, which is very time-consuming.

Especially in the case of loose-leaf publications, whereby additional pages and/or substitute pages are regularly produced so as to update said publications, the abovementioned working method is time-consuming and causes problems.

The invention aims a method for processing a structured document which avoids the above-mentioned disadvantage and which makes it possible to process in a structured manner in a very simple and fast way.

This aim is reached according to the invention in that the medium-independent information is kept separate from the medium-dependant and/or publication-dependant information, whereby the structured document with medium-independent information is stored in a first database on the one hand, and a list with medium-dependant and/or publication-dependant information which is linked to the structured document is stored separately in a second database, and in that, after the structured document in the first-mentioned database has been processed on the basis of the list with adjustments, the position of the medium-dependant and/or publication-dependant information in the second database is adjusted.

The medium-dependant information may contain page separators, in which case the structured document is stored in the first database without any information related to a medium, and whereby the paging is determined by means of a paging device and the information of this paging device is stored in the second database, the structured document is adjusted, a list of the adjustments is made, and the information related to the paging is adjusted in the second database on the basis of said list.

This makes it possible to indicate a certain point in the document, for example the beginning and/or the end of a page, and to keep this in place after the processing as well.

Said point is stored in another database than the database containing the medium-independent information of the structured document, as a result of which the medium-independent information can be kept separate from the medium-dependant information.

Preferably, a document is processed which is structured according to what is called the SGML method (Standard Generalised Mark-up Language) or the XML method (Extensible Mark-up Language), which is derived from the latter.

SGML and XML are medium-neutral methods for structuring text, whereby the text can be converted for the medium internet/intranet, CD-ROM, paper and any future medium whatsoever.

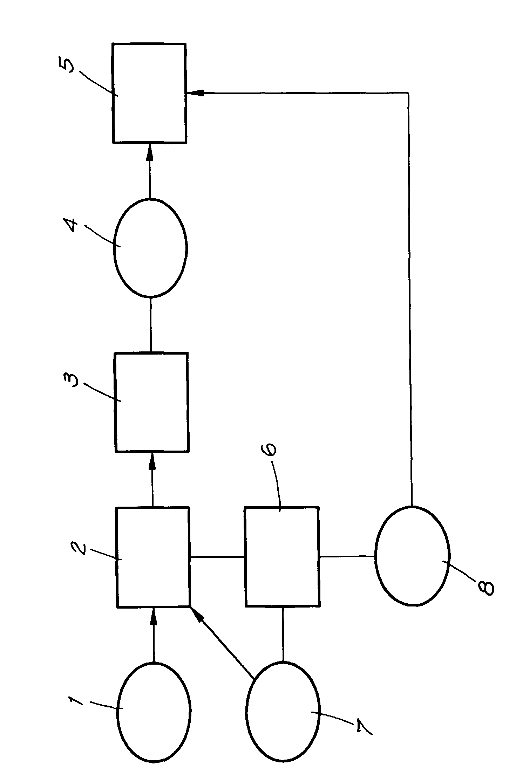

In order to better explain the characteristics of the invention, the following preferred embodiment of a method for processing a structured element according to the invention is described as an example only without being limitative in any way, with reference to the accompanying drawing representing a block diagram of this method.

In a first stage, the document 1, for example a text, is stored in an SGML- or XML-structured form in a database 2.

This database 2 does not contain any medium-dependant and/or publication-dependant information, i.e. it does not contain any page separators.

The structured document 1 is subsequently sent to a paging device 3, where the document 1 is divided in pages.

This paging device 3 provides information 4 related to the paging, for example the beginning and/or end positions of the pages.

This medium-dependant information 4 is stored in a database 5.

In this database 5, the data related to the pages are thus stored for later on.

The latter information can be used to compose a paged document on paper or to provide references coinciding with the end and/or the beginning of a page when the document is transcribed on a CD-ROM or converted in HTML-format.

By means of a document processor 6, the structured document 1 from the database 2, which is for example represented on a computer screen, is processed into a newly structured document 7.

During this processing is made a list 8 of the adjustments or adjusted document elements.

With this list 8, the information 4 related to the original paging stored in the database 5 is adjusted.

Pages may have become shorter or longer. In the document 7, the beginning and end of the pages can be maintained, so that in the case of a shorter text, a part of a page remains blank, or in case of a longer text a page is split, namely in what is called a page A and a page B.

Thus it is possible for a beginning or an end or any other point of a page whatsoever which was determined by the paging of the originally structured document 1 and which was stored in the database 5, to be maintained on a specific place in the publication in the revised versions as well. Also after the information 4 related to the paging has been adjusted, said data thus remain on the same place in the document, which place is stored in the database 5 thanks to the adjustment of the information 4 in said database 5.

Thanks to the new information related to the paging, the newly structured document 7 can be published as a paged document on paper or it can be published on a CD-ROM or as an HTML-application, whereby the beginning and/or the end of the pages is indicated.

If the structured document is produced by a publisher and the paged document is produced by a printer, both the publisher and the printer can adjust the document and the paging.

In the end, the database 2 contains the adjusted structured SGML or XML document, and the database 5 contains the adjusted information related to the paging.

Since both the printer and the publisher may have access to these databases 2 and 5, the printer can for example create the paged document on paper, and the publisher can create the document on CD-ROM or in HTML-format containing references related to the pages, on the basis of the data from both databases.

There is conformity as far as the pages are concerned, such that a person can consult the document on a Web site and call a certain passage, and inform another person having a printed version of this document in his possession on what page he can find the same passage in his version.

The medium-dependant information must not necessarily consist of page separators. Also other information depending on the medium which will be used is possible.

Besides or instead of medium-dependant information, also publication-dependant information can be linked to the document 1 and can be stored in the second database 5. This publication-dependant information may for example concern the place of a few dots representing a paragraph which can be either or not filled in.

What is important is that this medium-dependant and/or publication-dependant information is stored separately from the medium-independent information, and that after the position of the medium-independent information has been processed, the medium-dependant and/or publication-dependant information which is linked to the structured document is adjusted.

The invention is by no means limited to the above-described embodiment represented in the accompanying drawing; on the contrary, such a method for processing a structured document can be made in all sorts of variants while still remaining within the scope of the invention.

## Claims

1. Method for processing a structured document, whereby the structured document (1) is stored in a database (2) without any medium-dependant and/or publication-dependant information, characterised in that the medium-independent information is kept separate from the medium-dependant and/or publication dependant information, whereby the structured document (1) with medium-independent information is stored in a first database (2) on the one hand, and a list (8) with medium-dependant and/or publication-dependant information which is linked to the structured document (1) is stored separately in a second database (5), and in that after the structured document (1) in the first-mentioned database (2) has been processed on the basis of the list (8) with adjustments, the position of the medium-dependant and/or publication-dependant information in the second database (5) is adjusted.

2. Method according to claim 1, characterised in that the medium-dependant information contains page separators, in which case the structured document (1) is stored in the first database (2) without any information related to a medium, and whereby the paging is determined by means of a paging device (3) and the information of this paging device (3) is stored in the second database (5), the structured document is adjusted, a list (8) of the adjustments is made, and the information related to the paging is adjusted in the second database (5) on the basis of said list (8).

3. Method according to claim 2, characterised in that the beginning and/or the end of a page of the document or any other point thereof is determined by the paging of the structured document (1), and is maintained after the processing of said document when the paging is adjusted.

4. Method according to any of the preceding claims, characterised in that a document (1) is taken as a basis, structured according to what is called the SGML (Standard Generalised Mark-up Language) or the XML method (Extensible Mark-up Language), which is derived from the latter.
